# EUROPEAN PATENT APPLICATION

(11) **EP 4 432 444 A1**
(43) Date of publication of application: **18.09.2024**
(21) Application number: 21965910.9
(22) Date of filing: 30.11.2021
(51) Int. Cl.: H01M 50/30

(54) **BATTERY CELL AND MANUFACTURING METHOD AND MANUFACTURING SYSTEM THEREFOR, BATTERY AND ELECTRIC DEVICE**

(71) Applicant: Contemporary Amperex Technology Co., Limited, Ningde City, Fujian 352100 (CN)
(72) Inventor: ZHOU, Wenlin, Ningde City, Fujian 352100 (CN); LI, Quankun, Ningde City, Fujian 352100 (CN); WANG, Peng, Ningde City, Fujian 352100 (CN); JIN, Haizu, Ningde City, Fujian 352100 (CN)
(74) Representative: Gong, Jinping
(86) International application number: PCT/CN2021/134485
(87) International publication number: WO 2023/097469

(57) **Abstract**

Embodiments of the present application provide a battery cell, a method and system for manufacturing the battery cell, a battery, and a power consuming device. The battery cell includes a shell and an electrode assembly accommodated in the shell. The shell includes a wall portion, the wall portion includes a main body, a connecting portion and a reinforcing portion, the connecting portion surrounds an outer side of the reinforcing portion, and the main body surrounds an outer side of the connecting portion. The connecting portion is provided with a weakened region, and the battery cell is configured to rupture along the weakened region when an internal pressure of the battery cell reaches a threshold, so as to release the internal pressure. The maximum thickness of the reinforcing portion is greater than the maximum thickness of the main body so as to reduce deformation of the reinforcing portion under the internal pressure. According to the present application, the risk of rupture of the weakened region during normal use can be reduced, the service life of the battery cell can be prolonged, and the safety of the battery cell can be improved.

## Description

### Technical Field

The present application relates to the technical field of batteries, and in particular, to a battery cell, a method and system for manufacturing the battery cell, a battery, and a power consuming device.

### Background Art

Battery cells are widely used in electronic devices, such as a mobile phone, a notebook computer, an electromobile, an electric vehicle, an electric airplane, an electric ship, an electric toy car, an electric toy ship, an electric toy airplane, and an electric tool. The battery cells may include a nickel-cadmium battery cell, a nickel-hydrogen battery cell, a lithium-ion battery cell, a secondary alkaline zinc-manganese battery cell, etc.

In the development of the battery technology, in addition to improving the performance of battery cells, the safety is also a non-negligible issue. If the safety of battery cells cannot be guaranteed, the battery cells cannot be used. Therefore, how to enhance the safety of battery cells is an urgent technical problem to be solved in the battery technology.

### Summary of the Invention

The present application provides a battery cell, a method and system for manufacturing the battery cell, a battery, and a power consuming device, which can enhance the safety of the battery cell.

In a first aspect, an embodiment of the present application provides a battery cell, including a shell and an electrode assembly accommodated in the shell. The shell includes a wall portion, the wall portion includes a main body, a connecting portion and a reinforcing portion, the connecting portion surrounds an outer side of the reinforcing portion, and the main body surrounds an outer side of the connecting portion. The connecting portion is provided with a weakened region, and the battery cell is configured to rupture along the weakened region when an internal pressure of the battery cell reaches a threshold, so as to release the internal pressure. The maximum thickness of the reinforcing portion is greater than the maximum thickness of the main body so as to reduce deformation of the reinforcing portion under the internal pressure.

In case of thermal runaway of the battery cell, the wall portion deforms under the internal pressure. In the above solution, the main body has a smaller thickness relative to the reinforcing portion, and accordingly the main body is more prone to deformation relative to the reinforcing portion under the internal pressure. When the main body deforms, a stress is transferred to the connecting portion. Since the reinforcing portion has a greater thickness and is less prone to deformation, it is difficult for the reinforcing portion to release the stress on the connecting portion through deformation, so the weakened region has to withstand both the stress and the internal pressure and is more prone to rupture. Therefore, relative to a conventional pressure relief mechanism, the above solution is able to increase the thickness of the weakened region without changing the internal pressure needed for the rupture of the weakened region, thereby reducing the risk of rupture of the weakened region during normal use, prolonging the service life of the battery cell, and improving the safety of the battery cell.

In some embodiments, the wall portion includes a first recess, and the first recess is recessed, in a direction facing the electrode assembly, from a side of the wall portion away from the electrode assembly. The reinforcing portion includes a first protrusion protruding from a bottom surface of the first recess, and at least a portion of the first protrusion is accommodated in the first recess. The connecting portion is formed in an area corresponding to the bottom surface of the first recess.

In the above solution, the wall portion is provided with the first recess to reduce the thickness of the connecting portion so as to reduce the strength of the weakened region, so that the weakened region can rupture when the internal pressure of the battery cell reaches the threshold.

In some embodiments, the whole first protrusion is accommodated in the first recess. The first recess may accommodate the first protrusion completely, which can avoid an increase of the maximum size of the shell in a thickness direction due to the first protrusion and increase the energy density of the battery cell.

In some embodiments, the reinforcing portion protrudes from a surface of the main body facing the electrode assembly. In the above solution, the reinforcing portion protrudes toward the electrode assembly to increase the thickness and strength of the reinforcing portion.

In some embodiments, the wall portion further includes a second recess, and the second recess is recessed, in a direction away from the electrode assembly, from a side of the wall portion facing the electrode assembly. The connecting portion is formed between the bottom surface of the first recess and a bottom surface of the second recess. The reinforcing portion further includes a second protrusion protruding from the bottom surface of the second recess, and at least a portion of the second protrusion is accommodated in the second recess.

In the case of a certain thickness of the connecting portion, if only one side of the connecting portion is provided with the first recess, the first recess has a large depth, and accordingly it is difficult to mold the first recess. In the above solution, the first recess and the second recess are provided to form the connecting portion, so that requirements for the depth of the first recess and the second recess can be lowered and the difficulty in molding can be reduced. In the above solution, the thickness of the reinforcing portion can be further increased through the arrangement of the second protrusion.

In some embodiments, the main body includes a body portion, the body portion includes an inner surface and an outer surface opposite each other, the inner surface faces the electrode assembly, and the first recess is recessed, in a direction facing the electrode assembly, from the outer surface. The second protrusion protrudes from the inner surface. In the above solution, the second protrusion protrudes from the inner surface, so that the maximum thickness of the reinforcing portion is greater than the maximum thickness of the body portion.

In some embodiments, the main body further includes a third protrusion protruding from the inner surface, the second recess is recessed, in a direction away from the electrode assembly, from a top end face of the third protrusion, and the third protrusion surrounds an outer side of the second recess.

In the above solution, the third protrusion may reinforce a position of the wall portion where the second recess is formed, and may also increase a recessed depth of the second recess, thus providing more material for the reinforcing portion.

In some embodiments, the whole second protrusion is accommodated in the second recess. The second recess may accommodate the second protrusion completely, so that the risk of the second protrusion interfering with other internal structures of the battery cell can be reduced.

In some embodiments, a top end face of the second protrusion is flush with the top end face of the third protrusion. In the above solution, it is possible to increase the thickness of the reinforcing portion as much as possible without increasing the maximum size of the wall portion along the thickness direction.

In some embodiments, in the thickness direction of the wall portion, the bottom surface of the second recess is closer to the electrode assembly than the inner surface.

On the premise of a certain thickness of the connecting portion, the closer the bottom surface of the second recess is to the electrode assembly, and the closer the bottom surface of the first recess is to the electrode assembly. In the above solution, the bottom surface of the second recess is closer to the electrode assembly than the inner surface, so that a distance between the bottom surface of the first recess and the outer surface is increased, the risk of the weakened region of the connecting portion being damaged by an external member is reduced, and the safety of the battery cell is improved while the service life thereof is prolonged.

In some embodiments, the reinforcing portion is provided with a third recess, and the third recess extends, in a direction away from the electrode assembly, from the top end face of the second protrusion. In the thickness direction of the wall portion, a distance between a bottom surface of the third recess and a top end face of the first protrusion is greater than the maximum thickness of the main body.

In the above solution, the third recess is provided to expand the inner space of the battery cell, enabling the interior of the shell to be capable of containing more electrolyte, and improving performance of the battery cell. A portion of the reinforcing portion that is between the bottom surface of the third recess and the top end face of the first protrusion has a thickness greater than the maximum thickness of the main body, ensuring that the strength of the reinforcing portion meets the requirements.

In some embodiments, in the thickness direction of the wall portion, the depth of the third recess is less than the dimension of the second protrusion protruding from the bottom surface of the second recess.

In the above solution, by controlling the depth of the third recess, the portion of the reinforcing portion that is between the bottom surface of the third recess and the top end face of the first protrusion has a thickness greater than the maximum thickness of the main body, ensuring that the strength of the reinforcing portion meets the requirements.

In some embodiments, the connecting portion is provided with a groove such that the weakened region is formed in an area corresponding to the groove.

In the above solution, the connecting portion is provided with the groove such that the weakened region is formed on the connecting portion, making the strength of the weakened region smaller than the strength of the other area of the connecting portion.

In some embodiments, the wall portion further includes: a bending portion surrounding an outer side of the main body and extending in a direction facing the electrode assembly to form a fourth recess on a side of the main body facing the electrode assembly; and a plate portion surrounding an outer side of the bending portion, the fourth recess being recessed relative to a surface of the plate portion facing the electrode assembly.

In the above solution, with the provision of the fourth recess, the inner space of the battery cell may be expanded, thereby increasing the capacity of the battery cell. Moreover, the fourth recess may provide a space for the reinforcing portion, enabling the reinforcing portion to have enough thickness.

In some embodiments, the shell includes a housing and an end cap, the housing is provided with an opening, and the end cap is configured to cover the opening of the housing. The end cap refers to the wall portion.

In some embodiments, the end cap is of an integrally formed structure. In the above solution, the connecting portion having a pressure relief function and the reinforcing portion are integrated onto the end cap, so that the structure of the battery cell is simplified.

In a second aspect, an embodiment of the present application provides a battery, including a plurality of battery cells according to any one of the embodiments in the first aspect.

In a third aspect, an embodiment of the present application provides a power consuming device, including a battery cell according to any one of the embodiments in the first aspect, the battery cell being configured to supply electric energy.

In a fourth aspect, an embodiment of the present application provides a method for manufacturing a battery cell, the method including:
providing an electrode assembly;
providing a shell, where the shell includes a wall portion, the wall portion includes a main body, a connecting portion and a reinforcing portion, the connecting portion surrounds an outer side of the reinforcing portion, and the main body surrounds an outer side of the connecting portion; and
mounting the electrode assembly into the shell;
where the connecting portion is provided with a weakened region, and the battery cell is configured to rupture along the weakened region when an internal pressure of the battery cell reaches a threshold, so as to release the internal pressure; and the maximum thickness of the reinforcing portion is greater than the maximum thickness of the main body so as to reduce deformation of the reinforcing portion under the internal pressure.

In a fifth aspect, an embodiment of the present application provides a system for manufacturing a battery cell, the system including:
a first provision device configured to provide an electrode assembly;
a second provision device configured to provide a shell, where the shell includes a wall portion, the wall portion includes a main body, a connecting portion and a reinforcing portion, the connecting portion surrounds an outer side of the reinforcing portion, and the main body surrounds an outer side of the connecting portion; and
an assembly device configured to mount the electrode assembly into the shell,
where the connecting portion is provided with a weakened region, and the battery cell is configured to rupture along the weakened region when an internal pressure of the battery cell reaches a threshold, so as to release the internal pressure; and the maximum thickness of the reinforcing portion is greater than the maximum thickness of the main body so as to reduce deformation of the reinforcing portion under the internal pressure.

### Brief Description of the Drawings

To more clearly illustrate the technical solutions of the embodiments of the present application, the accompanying drawings required in the embodiments of the present application will be briefly described below. Obviously, the accompanying drawings described below are merely some embodiments of the present application, and for those of ordinary skill in the art, other accompanying drawings can be obtained from these accompanying drawings without involving any inventive effort.
FIG. 1 is a schematic structural diagram of a vehicle according to some embodiments of the present application;
FIG. 2 is a schematic exploded view of a battery according to some embodiments of the present application;
FIG. 3 is a schematic exploded view of a battery module shown in FIG. 2;
FIG. 4 is a schematic exploded view of a battery cell according to some embodiments of the present application;
FIG. 5 is a schematic structural diagram of an end cap shown in FIG. 4;
FIG. 6 is a schematic sectional view of the end cap shown in FIG. 5;
FIG. 7 is an enlarged schematic view of the end cap shown in FIG. 6 at circle A.
FIG. 8 is a partial sectional view of an end cap of a battery cell according to some other embodiments of the present application;
FIG. 9 is a schematic flowchart of a method for manufacturing a battery cell according to some embodiments of the present application; and
FIG. 10 is a schematic block diagram of a system for manufacturing a battery cell according to some embodiments of the present application.

In the accompanying drawings, the figures are not drawn to scale.

### Detailed Description of Embodiments

In order to make the objectives, technical solutions and advantages of embodiments of the present application clearer, the technical solutions in the embodiments of the present application will be described clearly below with reference to the accompanying drawings in the embodiments of the present application. Obviously, the embodiments described are some of, rather than all of, the embodiments of the present application. All other embodiments obtained by those of ordinary skill in the art based on the embodiments of the present application without involving any inventive effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "include/comprise" and "has/have" and any variations thereof in the description and the claims of the present application as well as the brief description of the accompanying drawings described above are intended to cover non-exclusive inclusion. The terms "first", "second", etc. in the specification and the claims of the present application and in the foregoing drawings are used to distinguish different objects, rather than describing a specific order or a primary-secondary relationship.

The phrase "embodiment" mentioned in the present application means that the specific features, structures and characteristics described with reference to the embodiment may be encompassed in at least one embodiment of the present application. The phrase at various locations in the description does not necessarily refer to the same embodiment, or an independent or alternative embodiment exclusive of another embodiment.

In the description of the present application, it should be noted that, the terms "mount", "connected", "connect", or "attach" should be interpreted in a broad sense unless explicitly defined and limited otherwise. For example, they may be a fixed connection, a detachable connection, or an integral connection; or may be a direct connection, an indirect connection by means of an intermediate medium, or internal communication between two elements. For those of ordinary skill in the art, the specific meanings of the foregoing terms in the present application may be understood according to specific circumstances.

The term "and/or" in the present application is merely a description of the associated relationship of associated objects, representing that three relationships may exist, for example, A and/or B, may be expressed as: only A exists, both A and B exist, and only B exists. In addition, the character "/" in the present application generally indicates that the associated objects before and after the character are in a relationship of "or".

In the embodiments of the present application, the same reference numerals denote the same components, and for the sake of brevity, the detailed description of the same components is omitted in different embodiments. It should be understood that the dimensions, such as thickness, length and width, of the various components in the embodiments of the present application illustrated in the accompanying drawings, as well as the dimensions, such as an overall thickness, length and width, of an integrated apparatus are merely illustrative and should not be construed to limit the present application in any way.

The phrase "a plurality of" appearing in the present application means two or more (including two).

In the present application, the battery cell may include a lithium-ion secondary battery cell, a lithium-ion primary battery cell, a lithium-sulfur battery cell, a sodium-lithium-ion battery cell, a sodium-ion battery cell, a magnesium-ion battery cell, etc., which will not be limited in the embodiments of the present application. The battery cell may be cylindrical, flat, cuboid or in another shape, which will not be limited by the embodiments of the present application.

A battery mentioned in the embodiments of the present application refers to a single physical module including one or more battery cells to provide a higher voltage and capacity. For example, the battery mentioned in the present application may include a battery module, a battery pack, etc. The battery generally includes a case for packaging one or more battery cells. The case can prevent liquid or other foreign matters from affecting charging or discharging of the battery cell(s).

The battery cell includes an electrode assembly and an electrolyte. The electrode assembly includes a positive electrode plate, a negative electrode plate and a separator. The battery cell operates mainly by relying on movements of metal ions between the positive electrode plate and the negative electrode plate. The positive electrode plate includes a positive current collector and a positive active material layer. A surface of the positive current collector is coated with the positive active material layer. the positive current collector includes a positive coated region and a positive tab connected to the positive coated region, the positive coated region is coated with the positive active material layer, and the positive tab is not coated with the positive active material layer. Taking a lithium-ion battery cell as an example, the positive current collector may be made of aluminum, and the positive active material layer includes a positive active material which may be lithium cobalt oxides, lithium iron phosphate, ternary lithium, lithium manganate, etc. The negative electrode plate includes a negative current collector and a negative active material layer. A surface of the negative current collector is coated with the negative active material layer. the negative current collector includes a negative coated region and a negative tab connected to the negative coated region, the negative coated region is coated with the negative active material layer, and the negative tab is not coated with the negative active material layer. The negative current collector may be made of copper, and the negative active material layer includes a negative active material which may be carbon, silicon, etc. The separator may be made of polypropylene (PP), polyethylene (PE), etc.

The battery cell further includes a shell, and an accommodating cavity for accommodating an electrode assembly is formed inside the shell. The shell may protect the electrode assembly from the outside to prevent external foreign matters from affecting charging or discharging of the electrode assembly.

Design factors on many aspects need to be simultaneously considered for the development of the battery technology, such as energy density, cycling life, discharge capacity, charge-discharge rate, and other performance parameters. In addition, the safety of the battery needs to be considered.

A pressure relief mechanism on the battery cell has an important effect on the safety of the battery cell. For example, when a phenomenon such as a short circuit or overcharge occurs, the battery cell may be internally subjected to thermal runaway and the pressure may suddenly rise. In this case, the internal pressure can be relieved to outside by actuating the pressure relief mechanism to prevent the battery cell from exploding and catching fire.

The pressure relief mechanism refers to an element or component that is actuated, when an internal pressure of the battery cell reaches a predetermined threshold, to relieve the internal pressure. The threshold design varies according to different design requirements. The threshold may depend on materials of one or more of the positive electrode plate, the negative electrode plate, the electrolyte, and the separator in the battery cell.

The pressure relief mechanism may be in the form of an explosion-proof valve, a gas valve, a pressure relief valve, a safety valve, etc., and may specifically use a pressure-sensitive element or construction. That is, when the internal pressure of the battery cell reaches a predetermined threshold, the pressure relief mechanism performs an action or a weakened region provided in the pressure relief mechanism ruptures, thereby creating an opening or a channel for relief of the internal pressure.

The "actuated" mentioned in the present application means that the pressure relief mechanism acts or is activated into a certain state, such that the internal pressure of the battery cell is relieved. Actions produced by the pressure relief mechanism may include, but are not limited to, at least a portion of the pressure relief mechanism being broken, cracked, torn or opened, etc. When the pressure relief mechanism is actuated, high-temperature and high-pressure substances inside the battery cell are discharged outward from an actuated part as emissions. In this way, the pressure of the battery cell can be relieved at a controllable pressure, thereby preventing the occurrence of potentially more serious accidents.

The emissions from the battery cell mentioned in the present application include, but are not limited to, an electrolyte, dissolved or split positive and negative electrode plates, fragments of a separator, a high-temperature and high-pressure gas generated by a reaction, flames, etc.

In order to simplify the structure of the battery cell, the inventors tried to integrate the pressure relief mechanism onto the shell. For example, the inventors created a weakened region on the shell, and the weakened region is configured to rupture when an internal pressure of the battery cell reaches a threshold, so as to release the internal pressure. When a phenomenon such as a short circuit or overcharge occurs, the battery cell may be internally subjected to thermal runaway and the pressure may thus suddenly rise. In this case, the weakened region ruptures to form a channel for relief of the internal pressure, so as to reduce the risk of explosion or fire of the battery cell, thereby improving the safety.

There is a direct correlation between the thickness of the weakened region and the internal pressure needed for actuation of the weakened region (hereinafter referred to as actuation pressure). The inventors have found that in order to enable the weakened region to rupture under the actuation pressure, the weakened region usually has a small thickness; in the late stage of the cycle of the battery cell, the weakened region is prone to rupture due to long-term corrosion of the electrolyte, resulting in leakage of the electrolyte and triggering a safety risk; the weakened region has a low strength, and the weakened region is also prone to rupture when the battery cell is subjected to an external impact, resulting in a failure of the battery cell; and the smaller the thickness of the weakened region, the lower the uniformity of its thickness in the molding process, which affects the consistency of the actuation pressure in different parts of the weakened region.

In view of this, embodiments of the present application provide a technical solution, in which the battery cell includes a shell and an electrode assembly accommodated in the shell. The shell includes a wall portion, the wall portion includes a main body, a connecting portion and a reinforcing portion, the connecting portion surrounds an outer side of the reinforcing portion, and the main body surrounds an outer side of the connecting portion. The connecting portion is provided with a weakened region, and the battery cell is configured to rupture along the weakened region when an internal pressure of the battery cell reaches a threshold, so as to release the internal pressure. The maximum thickness of the reinforcing portion is greater than the maximum thickness of the main body so as to reduce deformation of the reinforcing portion under the internal pressure. This technical solution is able to increase the thickness of the weakened region without changing the internal pressure needed for the rupture of the weakened region, thereby reducing the risk of rupture of the weakened region during normal use, prolonging the service life of the battery cell, and improving the safety of the battery cell.

The technical solutions described in the embodiments of the present application are applicable to a battery and a power consuming device using a battery.

The power consuming device may be a vehicle, a mobile phone, a portable device, a notebook computer, a ship, a spacecraft, an electric toy, an electric tool, etc. The vehicle may be a fuel vehicle, a gas vehicle or a new-energy vehicle. The new-energy vehicle may be a battery electric vehicle, a hybrid vehicle, an extended-range vehicle, etc. The spacecraft includes an airplane, a rocket, an aerospace plane, a spaceship, etc. The electric toy includes a stationary or mobile electric toy, such as a game machine, an electric toy car, an electric toy ship, and an electric toy airplane. The electric tool includes a metal cutting electric tool, a grinding electric tool, an assembling power tool, and a railway power tool, such as an electric drill, an electric grinder, an electric wrench, an electric screwdriver, an electric hammer, an electric impact drill, a concrete vibrator, and an electric planer. The power consuming devices mentioned above are not specifically limited in the embodiments of the present application.

For ease of description, an example in which the power consuming device is a vehicle is taken for description in the following embodiments.

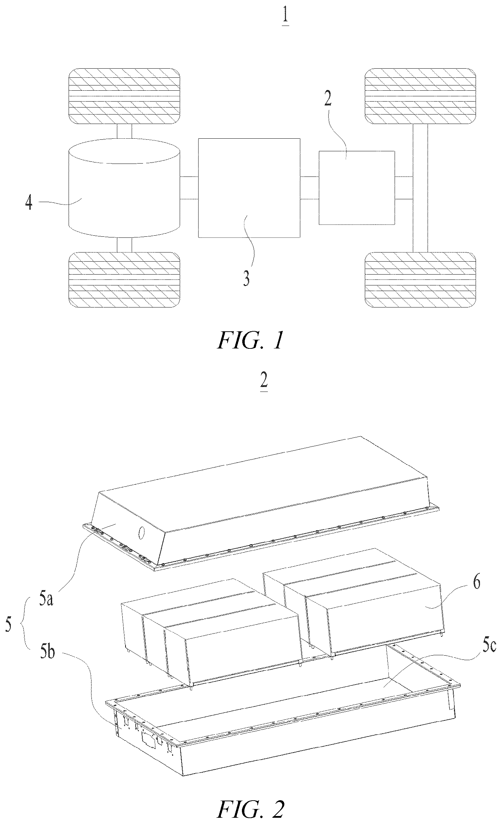

FIG. 1 is a schematic structural diagram of a vehicle according to some embodiments of the present application.

As shown in FIG. 1, a battery 2 is provided inside the vehicle 1, and the battery 2 may be arranged at the bottom, the head or the rear of the vehicle 1. The battery 2 may be configured to supply power to the vehicle 1. For example, the battery 2 may be used as a power supply for operating the vehicle 1.

The vehicle 1 may further include a controller 3 and a motor 4. The controller 3 is configured to control the battery 2 to supply power to the motor 4, for example, to meet working power requirements during starting, navigation and traveling of the vehicle 1.

In some embodiments of the present application, the battery 2 can not only serve as a power supply for operating the vehicle 1, but also serve as a power supply for driving the vehicle 1, in place of or partially in place of fuel or natural gas, to supply driving power to the vehicle 1.

FIG. 2 is a schematic exploded view of a battery according to some embodiments of the present application.

As shown in FIG. 2, the battery 2 includes a case 5 and a battery cell (not shown) accommodated in the case 5.

The case 5 is configured to accommodate the battery cell, and the case 5 may have various structures. In some embodiments, the case 5 may include a first case part 5a and a second case part 5b. The first case part 5a and the second case part 5b cover each other, and the first case part 5a and the second case part 5b jointly define an accommodation space 5c for accommodating the battery cell. The second case part 5b may be of a hollow structure with one end opened, the first case part 5a is of a plate-like structure, and the first case part 5a covers the open side of the second case part 5b to form the case 5 having the accommodation space 5c. The first case part 5a and the second case part 5b each may also be of a hollow structure with one side opened, and the open side of the first case part 5a covers the open side of the second case part 5b to form the case 5 having the accommodation space 5c. Of course, the first case part 5a and the second case part 5b may have various shapes such as a cylinder and a cuboid.

To improve the sealing performance after the first case part 5a and the second case part 5b are connected to each other, a seal, such as a sealant and a seal ring, may be also provided between the first case part 5a and the second case part 5b.

Assuming that the first case part 5a covers a top of the second case part 5b, the first case part 5a may also be referred to as an upper case cover, and the second case part 5b may also be referred to as a lower case.

In the battery 2, one or more battery cells may be provided. If a plurality of battery cells are provided, the plurality of battery cells may be in series connection or parallel connection or series-parallel connection. The series-parallel connection means that some of the plurality of battery cells are in series connection and some are in parallel connection. The plurality of battery cells may be directly in series connection or parallel connection or series-parallel connection, and then a unit composed of the plurality of battery cells is accommodated in the case 5. Of course, the plurality of battery cells may also be first in series connection or parallel connection or series-parallel connection to form a battery module 6, and a plurality of battery modules 6 are in series connection or parallel connection or series-parallel connection to form a unit and are accommodated in the case 5.

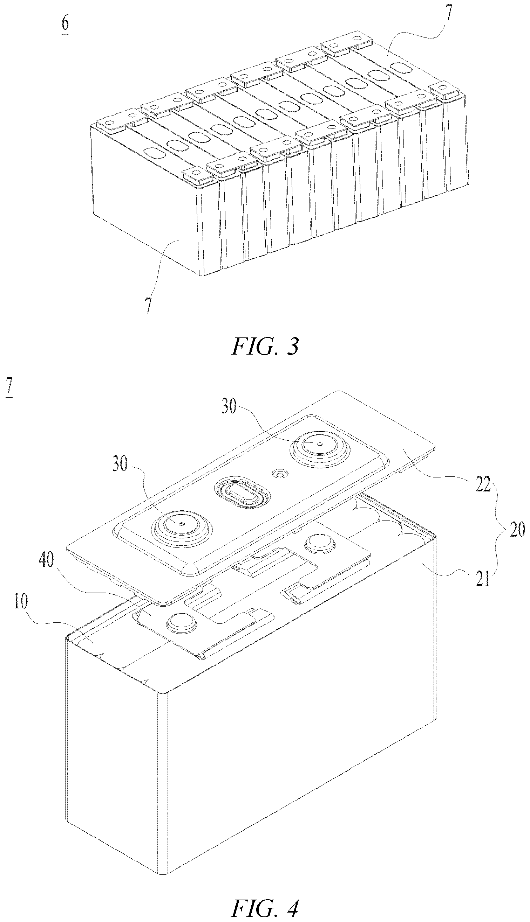

FIG. 3 is a schematic exploded view of a battery module shown in FIG. 2.

In some embodiments, as shown in FIG. 3, a plurality of battery cells 7 are provided, and the plurality of battery cells 7 are connected in series or in parallel or in series-parallel to form a battery module 6. A plurality of battery modules 6 are connected in series or in parallel or in series-parallel to form a unit and are accommodated in the case.

The plurality of battery cells 7 in the battery module 6 may be electrically connected to each other by means of a busbar component to implement series connection or parallel connection or series-parallel connection between the plurality of battery cells 7 in the battery module 6.

FIG. 4 is a schematic exploded view of a battery cell according to some embodiments of the present application.

As shown in FIG. 4, the battery cell 7 includes a shell 20 and an electrode assembly 10 accommodated in the shell 20.

The electrode assembly 10 is a core component for the battery cell 7 to realize the functions of charging and discharging, which includes a positive electrode plate, a negative electrode plate, and a separator. The positive electrode plate and the negative electrode plate have opposite polarities, and the separator is configured to insulate and isolate the positive electrode plate from the negative electrode plate. The electrode assembly 10 operates mainly by relying on movements of metal ions between the positive electrode plate and the negative electrode plate.

One or more electrode assemblies 10 may be provided. In case of a plurality of electrode assemblies 10, the plurality of electrode assemblies 10 may be arranged in a stacked manner. As an example, in FIG. 4, four electrode assemblies 10 are provided.

The shell 20 is of a hollow structure, and has an accommodating cavity formed therein for accommodating the electrode assembly 10 and the electrolyte. The shell 20 may be in various shapes, such as cylindrical or cuboid. The shell 20 may be shaped depending on the specific shape of the electrode assembly 10. For example, if the electrode assembly 10 is of a cylindrical structure, a cylindrical shell may be used; and if the electrode assembly 10 is of a cuboid structure, a cuboid shell may be used.

In some embodiments, the shell 20 includes a housing 21 and an end cap 22. The housing 21 is provided with an opening, and the end cap 22 covers the opening.

The housing 21 may be of a structure with an opening on one side, and one end cap 22 is provided and covers the opening of the housing 21. Alternatively, the housing 21 may also be of a structure with openings on both sides, two end caps 22 are provided, and the two end caps 22 cover the two openings of the housing 21, respectively.

As an example, the end cap 22 is connected to the housing 21 by welding, bonding, or snap-fitting, or in other ways.

In some embodiments, the housing 21 is a structure with an opening on one side and includes a bottom wall and at least one side wall connected to the bottom wall, and the side wall surrounds the bottom wall.

In some examples, the housing 21 is a cylindrical housing. Specifically, the housing 21 includes a cylindrical side wall. One end of the side wall is connected to a bottom wall and the other end encloses to form an opening opposite the bottom wall.

In other examples, the housing 21 is a cuboid housing. Specifically, the housing 21 includes four flat plate-like side walls, and the four side walls enclose to form an opening opposite the bottom wall.

In some embodiments, the battery cell 7 further includes two electrode terminals 30. The two electrode terminals 30 may be arranged on the end cap 22. The two electrode terminals 30 are a positive electrode terminal and a negative electrode terminal respectively. The positive electrode terminal is to be electrically connected to the positive electrode plate of the electrode assembly 10, and the negative electrode terminal is to be electrically connected to the negative electrode plate, so that the electric energy generated by the electrode assembly 10 is directed to the outside of the housing 20.

In some embodiments, each electrode terminal 30 is correspondingly provided with a connecting member 40, which may be referred to as a current collecting member and is located between the end cap 22 and the electrode assembly 10 and used for an electrical connection between the electrode terminal 30 and the corresponding electrode plate.

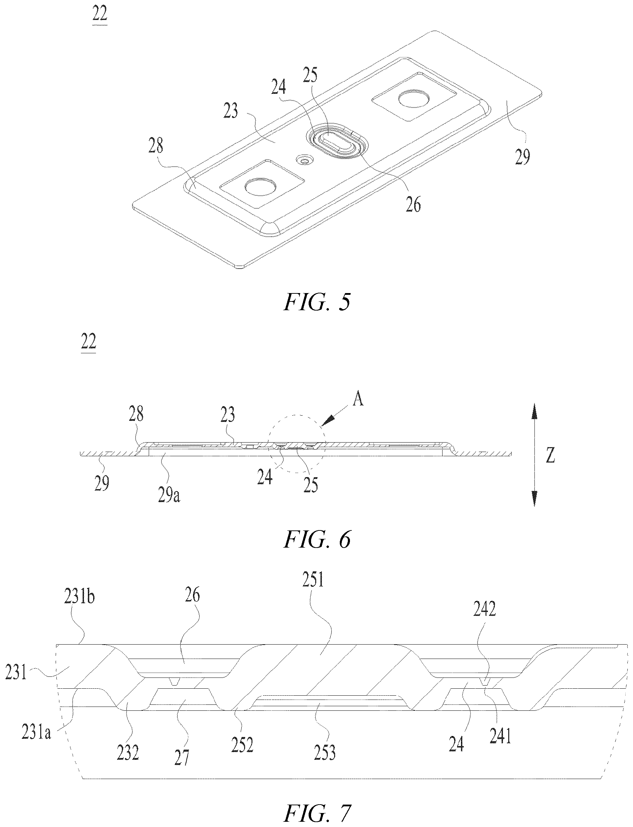

FIG. 5 is a schematic structural diagram of an end cap shown in FIG. 4; FIG. 6 is a schematic sectional view of the end cap shown in FIG. 5; and FIG. 7 is an enlarged schematic view of the end cap shown in FIG. 6 at circle A.

With reference to FIG. 4 to FIG. 7, a battery cell 7 provided in the embodiments of the present application includes a shell 20 and an electrode assembly 10 accommodated in the shell 20. The shell 20 includes a wall portion, the wall portion includes a main body 23, a connecting portion 24 and a reinforcing portion 25, the connecting portion 24 surrounds an outer side of the reinforcing portion 25, and the main body 23 surrounds an outer side of the connecting portion 24. The connecting portion 24 is provided with a weakened region 241, and the battery cell 7 is configured to rupture along the weakened region 241 when an internal pressure of the battery cell 7 reaches a threshold, so as to release the internal pressure. The maximum thickness of the reinforcing portion 25 is greater than the maximum thickness of the main body 23 so as to reduce deformation of the reinforcing portion 25 under the internal pressure.

In some examples of the present application, the wall portion may refer to the end cap 22. In some other examples, the wall portion may be a portion of the housing 21, for example, the wall portion may be either a side wall or a bottom wall of the housing 21.

For the sake of descriptive brevity, the accompanying drawings and the following description are illustrated with the end cap 22 as the wall portion. It should be understood that the wall portion described in the present application is not limited to the end cap 22.

The connecting portion 24 is a ring-shaped structure and is connected between the main body 23 and the reinforcing portion 25. An inner end of the connecting portion 24 is connected to the reinforcing portion 25, and an outer end of the connecting portion is connected to the main body 23.

The strength of the weakened region 241 is less than the strength of the main body 23, the strength of the reinforcing portion 25, and the strength of the other area of the connecting portion 24. As an example, the thickness of the weakened region 241 is less than the thickness of the main body 23, the thickness of the reinforcing portion 25, and the thickness of the other area of the connecting portion 24. According to the embodiments of the present application, the thickness and strength of the weakened region 241 can be reduced by providing a structure such as a groove or an indentation on the connecting portion 24 so as to enable the weakened region 241 to rupture when the internal pressure of the battery cell 7 reaches the threshold.

The thickness of the reinforcing portion 25 is a dimension of the reinforcing portion 25 in the thickness direction Z of the wall portion, and the thickness of the main body 23 is a dimension of the main body 23 in the thickness direction Z of the wall portion. In the description of the embodiments of the present application, the thickness is a dimension of a solid part along the thickness direction Z.

The connecting portion 24 and the reinforcing portion 25 form a pressure relief mechanism for the battery cell 7. As an example, after the rupture of the weakened region 241, the reinforcing portion 25 may be completely detached from the main body 23 under the internal pressure, or may be kept connected to the main body 23 and folded outwardly.

In case of thermal runaway of the battery cell 7, the wall portion deforms under the internal pressure. In this embodiment, the main body 23 has a smaller thickness relative to the reinforcing portion 25, so the main body 23 is more prone to deformation relative to the reinforcing portion 25 under the internal pressure. When the main body 23 deforms, a stress is transferred to the connecting portion 24. Since the reinforcing portion 25 has a greater thickness and is less prone to deformation, it is difficult for the reinforcing portion 25 to release the stress on the connecting portion 24 through deformation, so the weakened region 241 has to withstand both the stress and the internal pressure and is more prone to rupture. Therefore, relative to a conventional pressure relief mechanism, this embodiment is able to increase the thickness of the weakened region 241 without changing the internal pressure needed for the rupture of the weakened region 241, thereby reducing the risk of rupture of the weakened region 241 during normal use, prolonging the service life of the battery cell 7, and improving the safety of the battery cell 7.

Relative to the conventional pressure relief mechanism, this embodiment is able to increase the thickness of the weakened region 241, so as to simplify the molding process of the weakened region 241, improve the uniformity of its thickness during the molding process, and ensure the consistency of the internal pressure needed for rupture of different parts of the weakened region 241.

In some embodiments, the wall portion includes a first recess 26. The first recess 26 is recessed, in a direction facing the electrode assembly 10, from a side of the wall portion away from the electrode assembly 10. The reinforcing portion 25 includes a first protrusion 251 protruding from a bottom surface of the first recess 26, and at least a portion of the first protrusion 251 is accommodated in the first recess 26. The connecting portion 24 is formed in an area corresponding to the bottom surface of the first recess 26.

The first recess 26 is open at an end away from the electrode assembly 10.

In some examples, the whole first protrusion 251 may be accommodated in the first recess 26. In some other examples, the first protrusion 251 may also protrude outside of the first recess 26, and the first protrusion 251 is only partially accommodated in the first recess 26.

At least a portion of the bottom surface of the first recess 26 is the surface of the connecting portion 24 away from the electrode assembly 10.

In this embodiment, the wall portion is provided with the first recess 26 to reduce the thickness of the connecting portion 24 so as to reduce the strength of the weakened region 241, so that the weakened region 241 can rupture when the internal pressure of the battery cell 7 reaches the threshold.

In some embodiments, the first recess 26 may be formed by extruding the wall portion. During the extrusion molding process, part of the material of the wall portion flows into the reinforcing portion 25 to increase the thickness and strength of the reinforcing portion 25.

In some embodiments, the bottom surface of the first recess 26 is a plane perpendicular to the thickness direction Z.

In some embodiments, the whole first protrusion 251 is accommodated in the first recess 26.

In this embodiment, the first recess 26 may accommodate the first protrusion 251 completely, which can avoid an increase of the maximum size of the shell 20 in the thickness direction Z due to the first protrusion 251 and increase the energy density of the battery cell 7.

In some embodiments, in the thickness direction Z, the depth of the first recess 26 is equal to the dimension of the first protrusion 251 protruding from the bottom surface of the first recess 26.

In some embodiments, the wall portion further includes a second recess 27, and the second recess 27 is recessed, in a direction away from the electrode assembly 10, from a side of the wall portion facing the electrode assembly 10. The connecting portion 24 is formed between the bottom surface of the first recess 26 and a bottom surface of the second recess 27. The reinforcing portion 25 further includes a second protrusion 252 protruding from the bottom surface of the second recess 27, and at least a portion of the second protrusion 252 is accommodated in the second recess 27.

The second recess 27 is open at an end facing the electrode assembly 10.

In some examples, the whole second protrusion 252 may be accommodated in the second recess 27. In some other examples, the second protrusion 252 may also protrude out of the second recess 27, and the second protrusion 252 is only partially accommodated in the second recess 27.

In the case of a certain thickness of the connecting portion 24, if only one side of the connecting portion 24 is provided with the first recess 26, the first recess 26 has a large depth, and accordingly it is difficult to mold the first recess 26. In this embodiment, the first recess 26 and the second recess 27 are provided to form the connecting portion 24, so that requirements for the depth of the first recess 26 and the second recess 27 can be lowered, thereby reducing the forming difficulty. In this embodiment, the thickness of the reinforcing portion 25 may be further increased through the arrangement of the second protrusion 252.

In some embodiments, the second recess 27 is formed by extruding the wall portion. During the extrusion molding process, part of the material of the wall portion flows into the reinforcing portion 25 to increase the thickness and strength of the reinforcing portion 25.

In some embodiments, the main body 23 includes a body portion 231, the body portion 231 includes an inner surface 231a and an outer surface 231b opposite each other, the inner surface 231a faces the electrode assembly 10, and the first recess 26 is recessed, in a direction facing the electrode assembly 10, from the outer surface 231b. The second protrusion 252 protrudes from the inner surface 231a.

The inner surface 231a and the outer surface 231b are opposite each other along the thickness direction Z. The inner surface 231a faces the electrode assembly 10 while the outer surface 231b is away from the electrode assembly 10. As an example, both the inner surface 231a and the outer surface 231b are planes perpendicular to the thickness direction Z, and a spacing between the inner surface 231a and the outer surface 231b is the thickness of the body portion 231.

In this embodiment, the second protrusion 252 protrudes from the inner surface 231a so that the maximum thickness of the reinforcing portion 25 is greater than the maximum thickness of the body portion 231.

In some embodiments, the first protrusion 251 does not protrude from the outer surface 231b. As an example, the outer surface 231b is flush with a top end face of the first protrusion 251.

In some embodiments, the main body 23 further includes a third protrusion 232 protruding from the inner surface 231a, the second recess 27 is recessed, in a direction away from the electrode assembly 10, from a top end face of the third protrusion 232, and the third protrusion 232 surrounds an outer side of the second recess 27.

In this embodiment, the third protrusion 232 may reinforce a position of the wall portion where the second recess 27 is formed, and may also increase a recessed depth of the second recess 27, thus providing more material for the reinforcing portion 25.

In some embodiments, the whole second protrusion 252 is accommodated in the second recess 27.

In this embodiment, the second recess 27 may accommodate the second protrusion 252 completely, so that the risk of the second protrusion 252 interfering with other internal structures of the battery cell 7 can be reduced.

In some embodiments, a top end face of the second protrusion 252 is flush with the top end face of the third protrusion 232.

As an example, the top end face of the second protrusion 252 and the top end face of the third protrusion 232 are both planes perpendicular to the thickness direction Z.

In this embodiment, it is possible to increase the thickness of the reinforcing portion 25 as much as possible without increasing the maximum size of the wall portion along the thickness direction Z.

In some embodiments, in the thickness direction Z of the wall portion, the bottom surface of the second recess 27 is closer to the electrode assembly 10 than the inner surface 231a.

On the premise of a certain thickness of the connecting portion 24, the closer the bottom surface of the second recess 27 is to the electrode assembly 10, and the closer the bottom surface of the first recess 26 is to the electrode assembly 10. In this embodiment, the bottom surface of the second recess 27 is closer to the electrode assembly 10 than the inner surface 231a, so that a distance between the bottom surface of the first recess 26 and the outer surface 231b is increased, the risk of the weakened region 241 of the connecting portion 24 being damaged by an external member is reduced, and the safety of the battery cell 7 is improved while the service life thereof is prolonged.

In some embodiments, the reinforcing portion 25 is provided with a third recess 253, and the third recess 253 extends, in a direction away from the electrode assembly 10, from the top end face of the second protrusion 252. In the thickness direction Z of the wall portion, a distance between a bottom surface of the third recess 253 and a top end face of the first protrusion 251 is greater than the maximum thickness of the main body 23.

As an example, the bottom surface of the third recess 253 and the top end face of the first protrusion 251 are provided in parallel.

In this embodiment, the third recess 253 is provided to expand the inner space of the battery cell 7, enabling the interior of the shell 20 to be capable of containing more electrolyte, and improving performance of the battery cell 7. A portion of the reinforcing portion 25 that is between the bottom surface of the third recess 253 and the top end face of the first protrusion 251 has a thickness greater than the maximum thickness of the main body 23, ensuring that the strength of the reinforcing portion 25 meets the requirements.

In some embodiments, the third recess 253 may be formed by extruding the reinforcing portion 25. During the extrusion molding process, part of the material of the reinforcing portion 25 moves to and gathers at the surrounding portion of the third recess 253 to increase the maximum thickness and strength of the reinforcing portion 25 locally.

In some embodiments, in the thickness direction Z of the wall portion, the depth of the third recess 253 is less than the dimension of the second protrusion 252 protruding from the bottom surface of the second recess 27.

In this embodiment, by controlling the depth of the third recess 253, the portion of the reinforcing portion 25 that is between the bottom surface of the third recess 253 and the top end face of the first protrusion 251 has a thickness greater than the maximum thickness of the main body 23, ensuring that the strength of the reinforcing portion 25 meets the requirements.

In some embodiments, the connecting portion 24 is provided with a groove 242 such that the weakened region 241 is formed in an area corresponding to the groove 242.

The groove 242 may be provided on a surface of the connecting portion 24 facing the electrode assembly 10 or on a surface of the connecting portion 24 away from the electrode assembly 10. Along the thickness direction Z of the wall portion, the weakened region 241 is provided corresponding to the recess 242.

As an example, the groove 242 may be formed by removing material from the connecting portion 24 by means of machining, which facilitates lowering the processing cost and difficulty. Alternatively, the groove 242 may also be formed by extruding the connecting portion 24.

In this embodiment, the connecting portion 24 is provided with the groove 242 such that the weakened region 241 is formed on the connecting portion 24, making the strength of the weakened region 241 smaller than the strength of the other area of the connecting portion 24.

In some embodiments, the wall portion further includes a bending portion 28 and a plate portion 29. The bending portion 28 surrounds an outer side of the main body 23 and extends in a direction facing the electrode assembly 10 to form a fourth recess 29a on a side of the main body 23 facing the electrode assembly 10. The plate portion 29 surrounds an outer side of the bending portion 28, and the fourth recess 29a is recessed relative to a surface of the plate portion 29 facing the electrode assembly 10.

As an example, the wall portion refers to the end cap 22, and the plate portion 29 is configured to be connected to the housing 21.

In this embodiment, with the provision of the fourth recess 29a, the inner space of the battery cell 7 may be increased, thereby increasing the capacity of the battery cell 7. Moreover, the fourth recess 29a may also provide a space for the reinforcing portion 25, enabling the reinforcing portion 25 to have enough thickness.

In some embodiments, the maximum thickness of the reinforcing portion 25 is greater than the maximum thickness of the plate portion 29 and the maximum thickness of the bending portion 28.

In some embodiments, the shell 20 includes a housing 21 and an end cap 22. The housing 21 is provided with an opening, and the end cap 22 is configured to cover the opening of the housing 21. The end cap 22 refers to the wall portion.

It is easier to form structures such as the reinforcing portion 25 and the connecting portion 24 on the end cap 22 relative to the housing 21.

In some embodiments, the end cap 22 is of an integrally formed structure.

In this embodiment, the connecting portion 24 having a pressure relief function and the reinforcing portion 25 are integrated onto the end cap 22, so that the structure of the battery cell 7 is simplified.

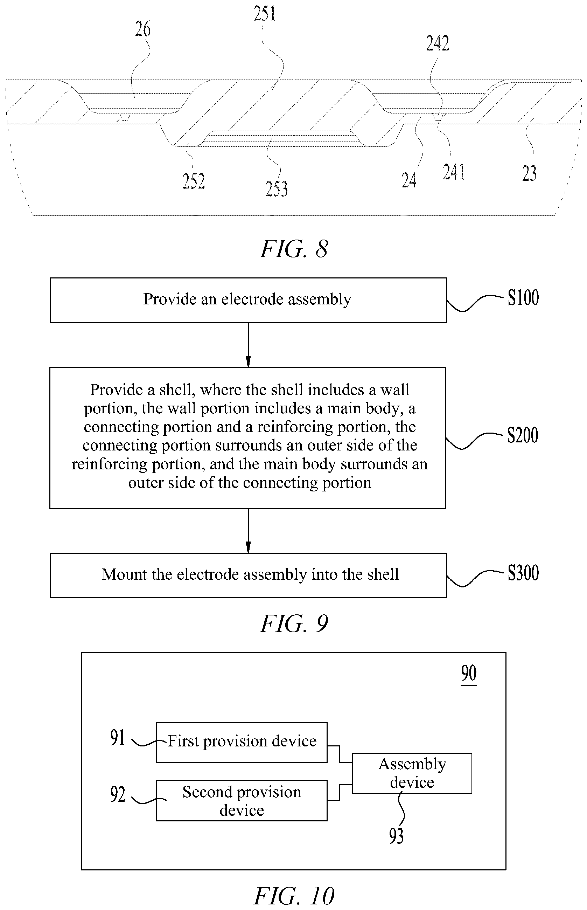

FIG. 8 is a partial sectional view of an end cap of a battery cell according to some other embodiments of the present application.

As shown in FIG. 8, in some embodiments, the reinforcing portion 25 protrudes from a surface of the main body 23 facing the electrode assembly 10. In this embodiment, the reinforcing portion 25 protrudes toward the electrode assembly 10 to increase the thickness and strength of the reinforcing portion 25.

In some embodiments, a surface of the main body 23 facing the electrode assembly 10 is flush with a surface of the connecting portion 24 facing the electrode assembly 10.

FIG. 9 is a schematic flowchart of a method for manufacturing a battery cell according to some embodiments of the present application.

As shown in FIG. 9, the method for manufacturing a battery cell provided in the embodiments of the present application includes the following steps:
S100: providing an electrode assembly;
S200: providing a shell, where the shell includes a wall portion, the wall portion includes a main body, a connecting portion and a reinforcing portion, the connecting portion surrounds an outer side of the reinforcing portion, and the main body surrounds an outer side of the connecting portion;
S300: mounting the electrode assembly into the shell.

The connecting portion is provided with a weakened region, and the battery cell is configured to rupture along the weakened region when an internal pressure of the battery cell reaches a threshold, so as to release the internal pressure; and the maximum thickness of the reinforcing portion is greater than the maximum thickness of the main body so as to reduce deformation of the reinforcing portion under the internal pressure.

It should be noted that for a related structure of the battery cell manufactured by the foregoing method for manufacturing a battery cell, reference may be made to the battery cells provided in the foregoing embodiments.

When a battery cell is manufactured based on the foregoing method for manufacturing a battery cell, it is not necessary to sequentially perform the foregoing steps, that is to say, the steps may be performed in the order mentioned in the embodiments, or the steps may be performed in a different order from the order mentioned in the embodiments, or several steps are performed simultaneously. For example, steps S100 and S200 may be performed in a random order, or may be performed simultaneously.

FIG. 10 is a schematic block diagram of a system for manufacturing a battery cell according to some embodiments of the present application.

As shown in FIG. 10, the system 90 for manufacturing a battery cell according to the embodiments of the present application includes a first provision device 91, a second provision device 92 and an assembly device 93. The first provision device 91 is configured to provide an electrode assembly; the second provision device 92 is configured to provide a shell, where the shell includes a wall portion, the wall portion includes a main body, a connecting portion and a reinforcing portion, the connecting portion surrounds an outer side of the reinforcing portion, and the main body surrounds an outer side of the connecting portion; and the assembly device 93 is configured to mount the electrode assembly into the shell. The connecting portion is provided with a weakened region, and the battery cell is configured to rupture along the weakened region when an internal pressure of the battery cell reaches a threshold, so as to release the internal pressure; and the maximum thickness of the reinforcing portion is greater than the maximum thickness of the main body so as to reduce deformation of the reinforcing portion under the internal pressure.

For a related structure of the battery cell manufactured by the foregoing manufacturing system, reference may be made to the battery cells provided in the foregoing embodiments.

It should be noted that the embodiments in the present application and features in the embodiments may be combined with each other without conflicts.

Finally, it should be noted that the above embodiments are merely used for illustrating rather than limiting the technical solutions of the present application. Although the present application has been illustrated in detail with reference to the foregoing embodiments, it should be understood by those of ordinary skill in the art that the technical solutions described in the foregoing embodiments may still be modified, or some of the technical features therein may be equivalently substituted, but these modifications or substitutions do not make the essence of corresponding technical solutions depart from the spirit and scope of the technical solutions of the embodiments of the present application.

## Claims

1. A battery cell, comprising a shell and an electrode assembly accommodated in the shell; wherein
the shell comprises a wall portion, the wall portion comprises a main body, a connecting portion and a reinforcing portion, the connecting portion surrounds an outer side of the reinforcing portion, and the main body surrounds an outer side of the connecting portion;
the connecting portion is provided with a weakened region, and the battery cell is configured to rupture along the weakened region when an internal pressure of the battery cell reaches a threshold, so as to release the internal pressure; and
the maximum thickness of the reinforcing portion is greater than the maximum thickness of the main body so as to reduce deformation of the reinforcing portion under the internal pressure.

2. The battery cell according to claim 1, wherein the wall portion comprises a first recess, and the first recess is recessed, in a direction facing the electrode assembly, from a side of the wall portion away from the electrode assembly;
the reinforcing portion comprises a first protrusion protruding from a bottom surface of the first recess, and at least a portion of the first protrusion is accommodated in the first recess; and
the connecting portion is formed in an area corresponding to the bottom surface of the first recess.

3. The battery cell according to claim 2, wherein the whole first protrusion is accommodated in the first recess.

4. The battery cell according to claim 2 or 3, wherein the reinforcing portion protrudes from a surface of the main body facing the electrode assembly.

5. The battery cell according to claim 2 or 3, wherein the wall portion further comprises a second recess, and the second recess is recessed, in a direction away from the electrode assembly, from a side of the wall portion facing the electrode assembly;
the connecting portion is formed between the bottom surface of the first recess and a bottom surface of the second recess; and
the reinforcing portion further comprises a second protrusion protruding from the bottom surface of the second recess, and at least a portion of the second protrusion is accommodated in the second recess.

6. The battery cell according to claim 5, wherein the main body comprises a body portion, the body portion comprises an inner surface and an outer surface opposite each other, the inner surface faces the electrode assembly, and the first recess is recessed, in a direction facing the electrode assembly, from the outer surface; and
the second protrusion protrudes from the inner surface.

7. The battery cell according to claim 6, wherein the main body further comprises a third protrusion protruding from the inner surface, the second recess is recessed, in a direction away from the electrode assembly, from a top end face of the third protrusion, and the third protrusion surrounds an outer side of the second recess.

8. The battery cell according to claim 7, wherein the whole second protrusion is accommodated in the second recess.

9. The battery cell according to claim 8, wherein a top end face of the second protrusion is flush with the top end face of the third protrusion.

10. The battery cell according to any one of claims 7-9, wherein in a thickness direction of the wall portion, the bottom surface of the second recess is closer to the electrode assembly than the inner surface.

11. The battery cell according to any one of claims 5-10, wherein the reinforcing portion is provided with a third recess, and the third recess extends, in a direction away from the electrode assembly, from the top end face of the second protrusion; and
in the thickness direction of the wall portion, a distance between a bottom surface of the third recess and a top end face of the first protrusion is greater than the maximum thickness of the main body.

12. The battery cell according to claim 11, wherein in the thickness direction of the wall portion, the depth of the third recess is less than the dimension of the second protrusion protruding from the bottom surface of the second recess.

13. The battery cell according to any one of claims 1-12, wherein the connecting portion is provided with a groove such that the weakened region is formed in an area corresponding to the groove.

14. The battery cell according to any one of claims 1-13, wherein the wall portion further comprises:
a bending portion surrounding an outer side of the main body and extending in a direction facing the electrode assembly to form a fourth recess on a side of the main body facing the electrode assembly; and
a plate portion surrounding an outer side of the bending portion, the fourth recess being recessed relative to a surface of the plate portion facing the electrode assembly.

15. The battery cell according to any one of claims 1-14, wherein the shell comprises a housing and an end cap, the housing is provided with an opening, and the end cap is configured to cover the opening of the housing; and
the end cap refers to the wall portion.

16. The battery cell according to claim 15, wherein the end cap is of an integrally formed structure.

17. A battery, comprising a plurality of battery cells according to any one of claims 1-16.

18. A power consuming device, comprising a battery cell according to any one of claims 1-16, the battery cell being configured to supply electric energy.

19. A method for manufacturing a battery cell, the method comprising:
providing an electrode assembly;
providing a shell, wherein the shell comprises a wall portion, the wall portion comprises a main body, a connecting portion and a reinforcing portion, the connecting portion surrounds an outer side of the reinforcing portion, and the main body surrounds an outer side of the connecting portion; and
mounting the electrode assembly into the shell;
wherein the connecting portion is provided with a weakened region, and the battery cell is configured to rupture along the weakened region when an internal pressure of the battery cell reaches a threshold, so as to release the internal pressure; and the maximum thickness of the reinforcing portion is greater than the maximum thickness of the main body so as to reduce deformation of the reinforcing portion under the internal pressure.

20. A system for manufacturing a battery cell, the system comprising:
a first provision device configured to provide an electrode assembly;
a second provision device configured to provide a shell, wherein the shell comprises a wall portion, the wall portion comprises a main body, a connecting portion and a reinforcing portion, the connecting portion surrounds an outer side of the reinforcing portion, and the main body surrounds an outer side of the connecting portion; and
an assembly device configured to mount the electrode assembly into the shell,
wherein the connecting portion is provided with a weakened region, and the battery cell is configured to rupture along the weakened region when an internal pressure of the battery cell reaches a threshold, so as to release the internal pressure; and the maximum thickness of the reinforcing portion is greater than the maximum thickness of the main body so as to reduce deformation of the reinforcing portion under the internal pressure.
